# EUROPÄISCHE PATENTSCHRIFT

(11) **EP 2 102 720 B1**
(45) Veröffentlichungstag und Bekanntmachung des Hinweises auf die Patenterteilung: **13.09.2017**
(21) Anmeldenummer: 07847932.6
(22) Anmeldetag: 06.12.2007
(51) Int. Cl.: G04G 7/00

(54) **VERFAHREN ZUM EMPFANG EINER VERTRAUENSWÜRDIGEN ZEITINFORMATION**
METHOD FOR RECEIVING A CONFIDENTIAL TIME INFORMATION
PROCÉDÉ DE RÉCEPTION D'UNE INFORMATION TEMPORELLE DIGNE DE CONFIANCE

(30) Priorität: 14.12.2006 DE 102006059487
(43) Veröffentlichungstag der Anmeldung: 23.09.2009
(73) Patentinhaber: Bundesdruckerei GmbH, 10958 Berlin (DE)
(72) Erfinder: BYSZIO, Frank, 16348 Wandlitz (DE)
(74) Vertreter: Richardt Patentanwälte PartG mbB
(86) Internationale Anmeldenummer: PCT/EP2007/063461
(87) Internationale Veröffentlichungsnummer: WO 2008/071627

(56) Entgegenhaltungen:
- JP-A- 2000 065 966
- JP-A- 2005 262 817
- JP-A- 2006 197 057
- US-A1- 2003 233 553
- US-A1- 2005 038 757

## Beschreibung

Die Erfindung betrifft Verfahren zum Empfang einer vertrauenswürdigen Zeitinformation, integrierte elektronische Schaltkreise, die eine solche vertrauenswürdige Zeitinformation benötigen, und entsprechende Computerprogrammprodukte.

Für auf asymmetrischen Schlüsselpaaren basierende kryptographische Verfahren kommen im Stand der Technik so genannte Zertifikate zum Einsatz. Zertifikate werden im Allgemeinen von hierzu berechtigten Stellen herausgegeben, den so genannten Certification Authorities (CA). Durch die CAs wird eine so genannte Public Key Infrastructure (PKI) realisiert.

Jedes von einer CA herausgegebene Zertifikat hat eine vorgegebene Gültigkeitsdauer, die in dem Zertifikat angegeben ist Dies gilt auch für so genannte Card Verifiable Certificates (CVCs), die aufgrund ihrer relativ einfachen Struktur intern durch einen integrierten elektronischen Schaltkreis, zum Beispiel einer Chipkarte, geprüft werden können, ohne dass ein Zugriff auf einen externen Server oder dergleichen erforderlich ist. Eine Implementierung von solchen CVCs ist beispielsweise in der ISO/IEC 7816-8 spezifiziert.

Der Einsatz von CVCs ist für das deutsche Gesundheitswesen für die Authentisierung zwischen dem so genannten Heilberufsausweis (HBA) und der elektronischen Gesundheitskarte (eGK) geplant.

JP 2005262817 A beschreibt ein Verfahren zur Ermöglichung der Kommunikation zwischen einem Gerät und einem ersten Server, wobei sich der erste Server bei dem Gerät mittels eines Server-Zertifikates authentifiziert. Bei dem Gerät kann es sich z.B. um einen Drucker handeln. Das Verfahren beinhaltet, dass das Gerät zunächst das Server-Zertifikat empfängt. Das Gerät kann das Zertifikat an einen zweiten Server senden. Der zweite Server überprüft das Server-Zertifikat des ersten Servers und sendet eine aktuelle Uhrzeit an das Gerät. Das Gerät kann daraufhin die von dem zweiten Server empfangene Uhrzeit als Referenzzeitwert setzen.

JP 2000065966 A beschreibt ein Verfahren zur Zeitsynchronisation zwischen einem Gerät und einem Informationsdienst. Der Informationsdienst übermittelt aktuelle Zeitangaben, die eine elektronische Signatur enthalten. Das Gerät beinhaltet einen Prozessor, eine Uhr, über Mittel zur Überprüfung einer Signatur, über Mittel zur Kommunikation mit dem Informationsdienst, z.B. über ein Netzwerk und über Mittel, um die aktuelle Uhrzeit der Uhr zu setzen. Das Gerät empfängt regelmäßig von dem Informationsdienst eine aktuelle Zeitangabe, welche eine Signatur enthält. Nach erfolgreicher Signaturprüfung kann die aktuelle Zeit der Uhr des Geräts auf die übermittelte Zeit gesetzt und die Uhr des Gerätes damit mit der Uhr des Informationsdiensts synchronisiert werden.

Der Erfindung liegt demgegenüber die Aufgabe zugrunde, verbesserte Verfahren zum Empfang einer vertrauenswürdigen Zeitinformation, insbesondere für die Zwecke der Zertifikatsprüfung, zu schaffen, sowie entsprechende Computerprogrammprodukte und integrierte elektronische Schaltkreise.

Die Aufgabe wird durch die unabhängigen Ansprüche gelöst. Vorteilhafte Ausführungsformen werden durch die abhängigen Ansprüche definiert.

Efindungsgemäß wird ein Verfahren zum Empfang einer vertrauenswürdigen Zeitinformation mit folgenden Schritten geschaffen: Empfang eines Zertfikats, wobei das Zertifikat eine Angabe der Anfangszeit von dessen Gültigkeitsdauer beinhaltet, Überprüfung der Validität des Zertifikats, Speicherung der Anfangszeit als die vertrauenswürdige Zeitinformation in einem Speicher, wenn das Zertifikat als valide erkannt worden ist.

Beispielsweise wird die vertrauenswürdige Zeitinformation von einem Sender abgesendet und von einem integrierten elektronischen Schaltkreis empfangen. Der integrierte elektronische Schaltkreis ist beispielsweise dazu ausgebildet, von demselben oder einem anderen Sender signierte Nachrichten zu empfangen. Im Rahmen der Signaturprüfung benötigt der integrierte elektronische Schaltkreis eine vertrauenswürdige Zeitinformation, um prüfen zu können, ob sich das zu der Signatur gehörende Zertifikat innerhalb seiner Gültigkeitsdauer befindet. Diese vertrauenswürdige Zeitinformation erhält der integrierte elektronische Schaltkreis beispielsweise durch die elektronischen Nachrichten selbst, da deren Zertifikate ja eine solche vertrauenswürdige Zeitinformation beinhalten, nämlich in Form von den jeweiligen Anfangszeiten der Gültigkeitsdauern der betreffenden Zertifikate.

Wird also von dem integrierten elektronischen Schaltkreis ein als valide erkanntes Zertifikat empfangen, so kann die Anfangszeit dieses Zertifikats zur Aktualisierung der in dem integrierten elektronischen Schaltkreis gespeicherten vertrauenswürdigen Zeitinformation verwendet werden, wenn diese Anfangszeit nach der gespeicherten vertrauenswürdigen Zeitinformation liegt.

Nach erfolgreicher Überprüfung der Validität der Signatur der Nachricht wird die somit als vertrauenswürdig erkannte, mit der Nachricht empfangene Anfangszeit zur Verwendung in einem nachfolgenden kryptographischen Prüfverfahren gespeichert. Beispielsweise wird mit der gespeicherten vertrauenswürdigen Zeitinformation überprüft, ob ein Zertifikat, das der Signatur einer nachfolgend empfangenen Nachricht zugeordnet ist, innerhalb von dessen Gültigkeitsdauer liegt.

Je nach der Häufigkeit der von dem integrierten elektronischen Schaltkreis empfangenen Zertifikaten und in Abhängigkeit von der statischen Verteilung von deren Anfangszeiten wird die in dem integrierten elektronischen Schaltkreis gespeicherte vertrauenswürdige Zeitinformation mehr oder weniger hinter der aktuellen Zeit liegen. Für viele Anwendungen ist jedoch die auf diese Art und Weise gewonnene verbauenswürdige Zeitinformation hinreichend präzise, um mit der erforderlichen Sicherheit überprüfen zu können, ob sich ein Zertifikat noch innerhalb seiner Gültigkeitsdauer befindet.

Die Erfindung ist besonders für solche integrierten elektronischen Schaltkreise vorteilhaft, die zur voltständig internen Überprüfung der Validität eines Zertifikats ausgebildet sind, also ohne beispielsweise auf einen externen Server oder dergleichen zugreifen zu müssen. Insbesondere ist die Erfindung besonders vorteilhaft für integrierte elektronische Schaltkreise, die zur Überprüfung der Validität von CVCs ausgeblidet sind. Bei solchen integrierten elektronischen Schaltkreisen stellte nämlich bisher die Zurverfügungstellung einer vertrauenswürdigen Zeitinformation und deren Einspeisung in den integrierten elektronischen Schaltkreis ein besonderes und bislang nicht zufrieden stellend gelöstes Problem dar.

In einem weiteren Aspekt betrifft die Erfindung ein Verfahren zum Empfang einer vertrauenswürdigen Zeitinformation mit folgenden Schritten: Empfang einer ersten signierten Nachricht mit einer Zeitinformation von einem ersten Sender, Überprüfung der Signatur der Nachricht, Speicherung der Zeitinformation als die vertrauenswürdige Zeitinformation in einem Speicher, wenn die Signatur als gültig erkannt worden ist.

Die Zeitinformation wird hier also nicht aus einem Zertifikat, das einer signierten Nachricht zugeordnet ist, gewonnen, sondern aus der Nachricht selbst, die entsprechende Daten beinhaltet. Nach erfolgreicher Überprüfung der Validität der Signatur der Nachricht wird die somit als vertrauenswürdig erkannte, mit der Nachricht empfangene Zeitinformation zur Verwendung in einem nachfolgenden kryptographischen Prüfverfahren gespeichert. Beispielsweise wird mit der gespeicherten vertrauenswürdigen Zeitinformation überprüft, ob ein Zertifikat, das der Signatur einer empfangenen Nachricht zugeordnet ist, innerhalb von dessen Gültigkeitsdauer liegt, d.h. es wird geprüft, ob die gespeicherte vertrauenswürdige Zeitinformation zwischen der Anfangszeit und der Endzeit der Gültigkeitsdauer liegt.

Nach einer Ausführungsform der Erfindung ist ein separater Sender für die Übersendung von Zeitinformationen beinhaltenden signierten Nachrichten an den integrierten elektronischen Schaltkreis vorgesehen. Dieser Sender kann in bestimmten Zeitabständen ein Zeitsynchronisationssignal in Form der signierten Nachricht an den integrierten elektronischen Schaltkreis senden, sodass die in dem integrierten elektronischen Schaltkreis gespeicherte vertrauenswürdige Zeitinformation in regelmäßigen oder unregelmäßigen Zeitabständen aktualisiert wird. Für besonders sicherheitskritische Anwendungen ist dabei vorteilhaft, wenn die Abstrahlung der Zeitsynchronisationsnachrichten in relativ kurzer Folge geschieht, um die gespeicherte vertrauenswürdige Zeitinformation immer relativ aktuell zu halten, wenn der elektronische Schaltkreis aktiv ist. Dies ist insbesondere zur Abwehr von sog. Replay-Attacken vorteilhaft.

Nach einer Ausführungsform der Erfindung hat der integrierten elektronische Schaltkreis Mittel zur Erzeugung eines lokalen Zeitsignals, wie zum Beispiel einer so genannten Local Clock, die zur ständigen Aktualisierung der vertrauenswürdigen Zeitinformation dient. Ungenauigkeiten dieser Local Clock werden durch den Empfang des Zeitsynchronisationssignals mit einer aktualisierten vertrauenswürdigen Zeitinformation von dem externen Sender innerhalb gewisser Zeitabstände korrigiert.

Nach einer Ausführungsform der Erfindung hat der integrierte elektronische Schaltkreis keine ständig laufende Local Clock, sondern bedient sich ausschließlich der gespeicherten vertrauenswürdigen Zeitinformation als Zeitreferenz. Dies ist insbesondere für integrierte elektronische Schaltkreise ohne eigene Energieversorgung. wie z.B. Chipkarten oder RFIDs, vorteilhaft.

In einem weiteren Aspekt betrifft die Erfindung ein Computerprogrammprodukt, insbesondere ein digitales Speichermedium, mit ausführbaren Instruktionen zur Durchführung eines erfindungsgemäßen Verfahrens. Die Instruktionen sind beispielsweise zur Ausführung durch den Mikroprozessor einer Chipkarte oder eines anderen elektronischen Geräts mit oder ohne eigene Energieversorgung vorgesehen.

Nach einer Ausführungsform der Erfindung ist der integrierte elektronische Schaltkreis als so genannter RFID-Chip ausgebildet. Der RFID-Chip hat eine RFID-Schnittstelle, über die er vertrauenswürdige Zeitinformation in Form von Zertifikaten bzw. in Form von signierten Nachrichten erhält.

Nach einer Ausführungsform der Erfindung ist der integrierte elektronische Schaltkreis Teil eines Dokuments, insbesondere eines Wert-oder Sicherheitsdokuments, wie zum Beispiel eines elektronischen Reisepasses, Personalausweises, Führerscheins, eines Berechtigungsnachweises oder dergleichen.

Nach einer Ausführungsform der Erfindung ist der integrierte elektronische Schaltkreis Teil einer Chipkarte, insbesondere einer Kreditkarte, Bezahlkarte oder dergleichen. Nach einer weiteren Ausführungsform der Erfindung ist der integrierte elektronische Schaltkreis Teil eines elektronischen Geräts, insbesondere eines Telekommunikationsgaräts, Navigationsgeräts oder einer Steuerung, insbesondere einer Maschinen-oder Anlagensteuerung.

Anwendungen der vorliegenden Erfindung sind besonders für solche elektronische Geräte, insbesondere Chipkarten und Dokumente, vorteilhaft, für deren sichere und korrekte Funktionsweise eine geschützte Übertragung von Nachrichten und Daten wesentlich ist. Dies kann insbesondere erforderlich sein, um vertrauliche Daten gegen unbefugte Zugriffe zu schützen und/oder um Sabotageakte, kriminelle oder terroristische Akte abzuwehren.

Anwendungen der vorliegenden Erfindung sind ferner besonders für solche elektronische Geräte, insbesondere Chipkarten und Dokumente, vorteilhaft, die über keine eigene Uhr verfügen. Der Erfindung ermöglicht es auch für solche Geräte, eine vertrauenswürdige Zeitinformation zur Verfugung zu stellen, die in dem Gerät gespeichert wird, und die in regelmäßigen. oder unregelmäßigen Abständen aktualisiert wird.

Im Weiteren werden Ausführungsformen der Erfindung mit Bezugnahme auf die Zeichnungen näher erläutert. Es zeigen:
- Figur 1: ein Blockdiagramm einer ersten Ausführungsform eines erfindungsgemäßen Empfängers,
- Figur 2: ein Flussdiagramm einer ersten Ausführungsform eines erfindungsgemäßen Verfahrens.
- Figur 3: Diagramme zur Veranschaulichung der Ausführungsform des erfindungsgemäßen Verfahrens der Figur 2,
- Figur 4: ein Blockdiagramm einer weiteren Ausführungsform eines erfindungsgemäßen Empfängers,
- Figur 5: ein Flussdiagramm einer Ausführungsform eines erfindungsgemäßen Verfahrens.
- Figur 6: ein Flussdiagramm einer weiteren Ausführungsform eines erfindungsgemäßen Verfahrens.

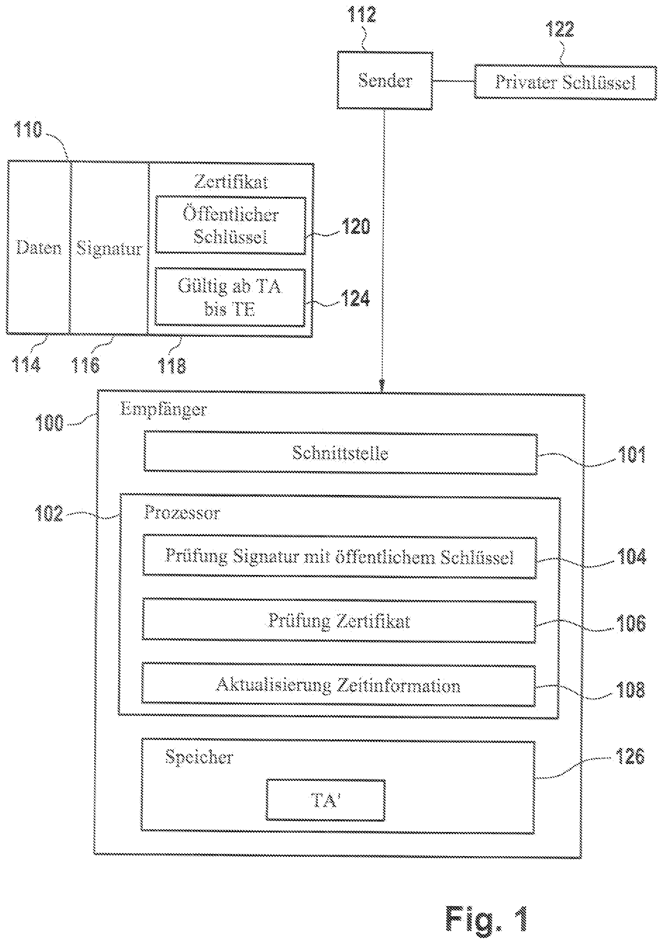

Die Figur 1 zeigt eine Ausführungsform eines erfindungsgemäßen integrierten elektronischen Schaltkreises, der einen Empfänger 100 implementiert. Der integrierte elektronische Schaltkreis kann durch einen oder mehrere Chips realisiert sein.

Der Empfänger 100 hat eine Schnittstelle 101 zum Empfang einer elektronischen Nachricht von einem Sender 112.

Die Schnittstelle 101 kann kontaktbehaftet oder kontaktlos ausgebildet sein oder auch als so genanntes Dual-Mode-Interface. Insbesondere kann es sich bei der Schnittstelle 101 um eine Chipkarten-Schnittstelle handeln oder um eine RFID-Schnittstelle. Die Schnittstelle 101 kann auch zum Empfang von Satellitensignalen, wie zum Beispiel GPS oder Galileo-Signalen ausgebildet sein,

Die elektronische Nachricht 110 beinhaltet Daten 114, eine Signatur 116 der Daten 114 und ein der Signatur 116 zugeordnetes Zertifikat 118.

Bei den Daten 114 kann es sich um Nutzdaten und/oder Kommandos handeln, wie zum Beispiel Chipkarten-Kommandos, Steuerdaten und/oder Positionsdaten.

Das Zertifikat 118 beinhaltet einen öffentlichen Schlüssel 120, der zu einem privaten Schlüssel 122 des Senders 112 korrespondieren muss, damit die Signatur 116 gültig sein kann, Ferner beinhaltet das Zertifikat eine Angabe von dessen Gültigkeitsdauer 124, beispielsweise in Form einer Anfangszeit TA und einer Endzeit TE. Die Gültigkeitsdauer 124 des Zertifikats 118 beginnt also mit der Anfangszeit TA und endet mit der Endzeit TE.

Das Zertifikat 118 wird beispielsweise im Rahmen einer so genannten Public Key Infrastructure (PKI) von einer hierzu autorisierten Zertifizierungsstelle (Certification Authority - CA) herausgegeben. Die CA hat ihrerseits ein Zertifikat mit einem öffentlichen Schlüssei, der zu einem privaten Schlüssel der CA korrespondiert, Das Zertifikat 118 ist seinerseits mit dem privaten Schlüssel der CA signiert. Zur vollständigen Prüfung der Signatur 116 wird die Validität des Zertifikats 118 durch eine so genannte Zertifikatskettenprüfung überprüft, wie an sich aus dem Stand der Technik bekannt.

Beispielsweise handelt es sich bei dem Zertifikat 118 um ein besonders einfach strukturiertes Zertifikat, dessen Validität durch den Empfänger 100 überprüfbar ist, auch wenn dieser eine nur relativ geringe Prozessorleistung hat, und nicht auf externe Komponenten zugreifen kann, insbesondere nicht auf externe Verzeichnisserver und dergleichen. Beispielsweise handelt es sich beim dem Zertifikat 118 um ein so genanntes Card Verifiable Certificate (CVC), dessen Validität vollständig intern durch den Empfänger 100 überprüfbar ist. Insbesondere kann es sich bei dem Zertifikat 118 um ein Zertifikat nach ISO/IEC 7816-6 handeln.

Der Empfänger 100 hat einen Prozessor 102 zur Ausführung von Programminstruktionen 104, 106 und 108. Die Programminstruktionen 104 dienen zur Prüfung von über die Schnittstelle 101 empfangenen Signaturen, insbesondere also der Signatur 116. Hierzu greifen die Programminstruktionen 104 auf den der betreffenden Signatur zugeordneten öffentlichen Schlüssel zu, beispielsweise also auf den öffentlichen Schlüssel 120 zur Überprüfung der Signatur 116.

Wenn sich die Signatur 116 mit Hilfe des öffentlichen Schlüssels 120 entschlüsseln lässt, so wird die Signatur 116 als solche als gültig betrachtet. Für eine vollständige Prüfung der Signatur 116 muss aber auch die Validität des der Signatur 116 zugeordneten Zertifikats 118 überprüft werden. Hierzu dienen die Programminstruktionen 106.

Durch die Programminstruktionen 106 wird die Validität des zertifikats, das der empfangenen elektronischen Signatur zugeordnet ist, beispielsweise also des Zertifikats 118, durch eine so genannte Zertifikatskettenprüfung überprüft. Wenn es sich bei dem Zertifikat 118 um ein CVC handelt, kann dies vollständig intern innerhalb des Empfängers 100 erfolgen, ohne die Notwendigkeit, über die Schnittstelle 101 auf externe Server zugreifen zu müssen.

Im Rahmen der Prüfung der Validität des Zertifikats durch die Programminstruktionen 106, wird auf einen elektronischen Speicher 126 des Empfängers 100 zugegriffen, indem eine Zeitinformation TA' gespeichert ist. Die Zeitinformation TA' liegt einen gewissen zeitlichen Abstand hinter der aktuellen Uhrzeit.

Die Programminstruktionen 106 greifen auf den Speicher 126 zu, um die Zeitinformation TA' zu lesen, und zwar zur Prüfung, ob die Gültigkeitsdauer des zu validierenden Zertifikats noch nicht abgelaufen ist, d.h. ob die Endzeit TE noch nicht erreicht ist. Für diesen Zweck wird die in dem Speicher 126 gespeicherte Zeitinformation TA' als hinreichend gute Näherung an die aktuelle Uhrzeit betrachtet.

Die Programminstruktionen 108 dienen zur Aktualisierung der Zeitinformation TA', die in dem Speicher 126 gespeichert ist Nachdem die Signatur einer empfangenen elektronischen Nachricht durch die Programminstruktionen 104 geprüft worden ist, und nachdem auch das zu der Signatur gehörende Zertifikat durch die Programminstruktionen 106 auf dessen Validität geprüft worden ist, wird die empfangene elektronische Nachricht als vertrauenswürdig betrachtet.

Damit steht dem Empfänger 100 aber auch eine neue vertrauenswürdige Zeitinformation zur Verfügung, nämlich in Form der Anfangszeit TA des betreffenden Zertifikats. Die Programminstruktionen 108 vergleichen die Anfangszeit TA des Zertifikats mit der in dem Speicher 126 gespeicherten Zeitinformation TA'.

Wenn die Anfangszeit TA nach der gespeicherten Zeitinformation TA' liegt, so bedeutet dies, dass die Anfangszeit TA aktueller als die gespeicherte Zeitinformation TA' ist. Daraufhin greifen die Programminstruktionen 108 auf den elektronischen Speicher 126 zu, um die gespeicherte Zeitinformation TA' zu aktualisieren, indem nämlich der für TA' gespeicherte Wert durch TA ersetzt wird.

Im Fall der elektronischen Nachricht 110 bedeutet dies, dass die Signatur 116 durch die Programminstruktionen 104 geprüft wird. Die Validität des Zertifikats 118 wird durch die Programminstruktionen 106 überprüft, indem eine Zertifikatskettenprüfung durchgeführt wird. Ferner wird im Rahmen der Prüfung der Validität des Zertifikats auch geprüft, ob dessen Gültigkeitsdauer noch nicht abgelaufen ist. Hierzu wird die in dem Speicher 126 gespeicherte Zeitinformation TA' als hinreichend gute Näherung für die aktuelle Zeit verwendet, sodass die Überprüfung, ob die Gültigkeitsdauer des Zertifikats 118 noch nicht abgelaufen ist, mit Hilfe dieser gespeicherten Näherung TA' durchgeführt wird.

Wenn die elektronische Nachricht 110 sowohl die Prüfung der Signatur 116 als auch die Validitätsprüfung des Zertifikats 118 besteht, wird diese als vertrauenswürdig akzeptiert. Daraufhin aktualisieren die Programminstruktionen 108 die gespeicherte Zeitinformation TA' mit der Anfangszeit TA des Zertifikats 118, wenn diese Anfangszeit TA nach der gespeicherten Zeitinformation TA' liegt.

Für eine nachfolgend von dem Sender 112 oder einem anderen Sender empfangene signierte elektronische Nachricht wird entsprechend vorgegangen, wobei dann die aktualisierte in dem Speicher 126 gespeicherte Zeitinformation TA' für die Prüfung der Gültigkeitsdauer des betreffenden Zertifikats durch die Programminstruktionen 106 verwendet wird.

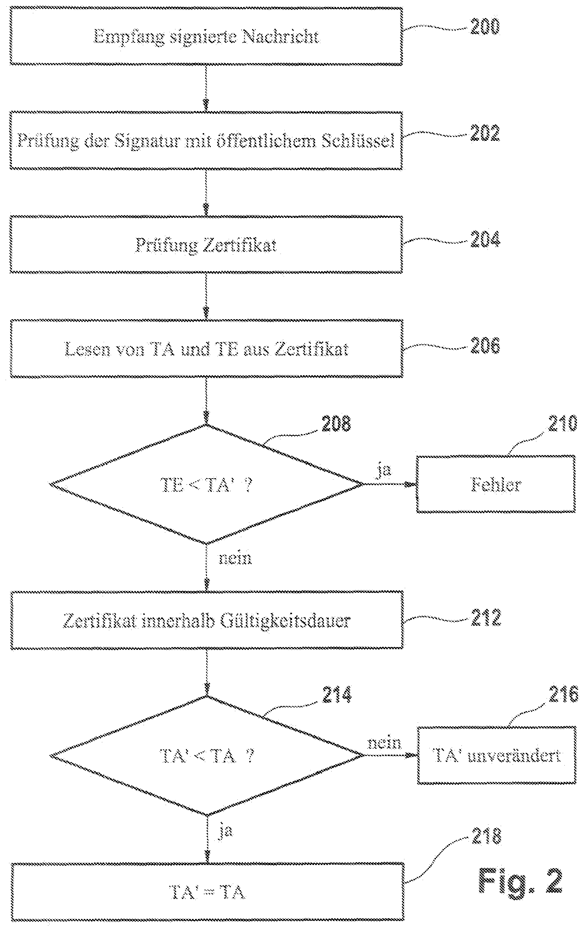

Die Figur 2 zeigt ein entsprechendes Flussdiagramm. In dem Schritt 200 wird von dem Empfänger eine signierte Nachricht empfangen. In dem Schritt 202 wird die Signatur der Nachricht mit dem der Signatur zugeordneten öffentlichen Schlüssel überprüft. In dem Schritt 204 wird das Zertifikat, das den öffentlichen Schlüssel enthält, einer Zertifikatskettenprüfung unterzogen. Ferner wird geprüft, ob die Gültigkeitsdauer des Zertifikats noch nicht überschritten ist, und ob das Zertifikat zur Aktualisierung der gespeicherten Zeitinformation TA' verwendet werden kann.

Hierzu werden in dem Schritt 206 die Anfangszeit TA und die Endzeit TE der Gültigkeitsdauer des Zertifikats aus dem Zertifikat gelesen. In dem Schritt 208 wird geprüft, ob die Endzeit TE vor der gespeicherten Zeitinformation TA' liegt. Wenn dies der Fall ist, ist die Gültigkeitsdauer des Zertifikats abgelaufen, sodass in dem Schritt 210 ein Fehlersignal generiert wird. Ist das Gegenteil der Fall, so wird davon ausgegangen, dass die Gültigkeitsdauer des Zertifikats mit hinreichender Wahrscheinlichkeit noch nicht abgelaufen ist (Schritt 212).

Nachfolgend wird in dem Schritt 214 geprüft, ob die gespeicherte Zeltinformation TA' vor der Anfangszeit TA des zuvor geprüften Zertifikats liegt. Wenn dies nicht der Fall ist, bleibt die gespeicherte Zeitinformation TA' unverändert (Schritt 216); ist das Gegenteil der Fall, so wird In dem Schritt 218 die gespeicherte Zeitinformation TA' mit der neu empfangenen Zeitinformation TA aktualisiert.

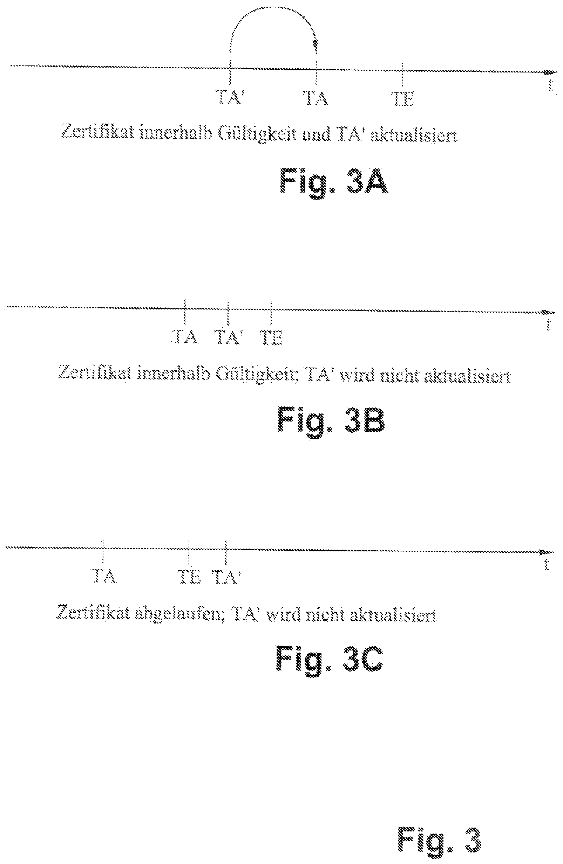

Die Figur 3 veranschaulicht diese Vorgehensweise an drei verschiedenen Beispielen anhand der Zeitachse t

Die Figur 3A zeigt die Situation, wenn TA und TE des Zertifikats vor der gespeicherten Zeitinformation TA' liegen. Wenn die Signatur der empfangenen Nachricht in Ordnung ist und das Zertifikat die Zertifikatskettenprüfung bestanden hat, wird das Zertifikat innerhalb seiner Gültigkeitsdauer liegend betrachtend und TA' wird durch TA aktualisiert (vgl. Schritt 218 der Figur 2).

Die Figur 3B zeigt ein Beispiel, wonach die gespeicherte Zeitinformation TA' zwischen TA und TE des Zertifikats liegt. Auch in diesem Fall wird das Zertifikat als in seiner Gültigkeitsdauer liegend betrachtet, da ja TA' vor TE liegt. Die gespeicherte Zeitinformation TA' wird aber nicht aktualisiert, da TA' nach TA liegt.

Die Figur 3C zeigt ein Beispiel, wonach sowohl TA als auch TE hinter der gespeicherten Zeitinformation TA' liegen. In diesem Fall ist die Gültigkeitsdauer des Zertifikats mit Sicherheit abgelaufen. Die gespeicherte Zeitinformation TA' wird nicht aktualisiert, da TA vor TA' liegt

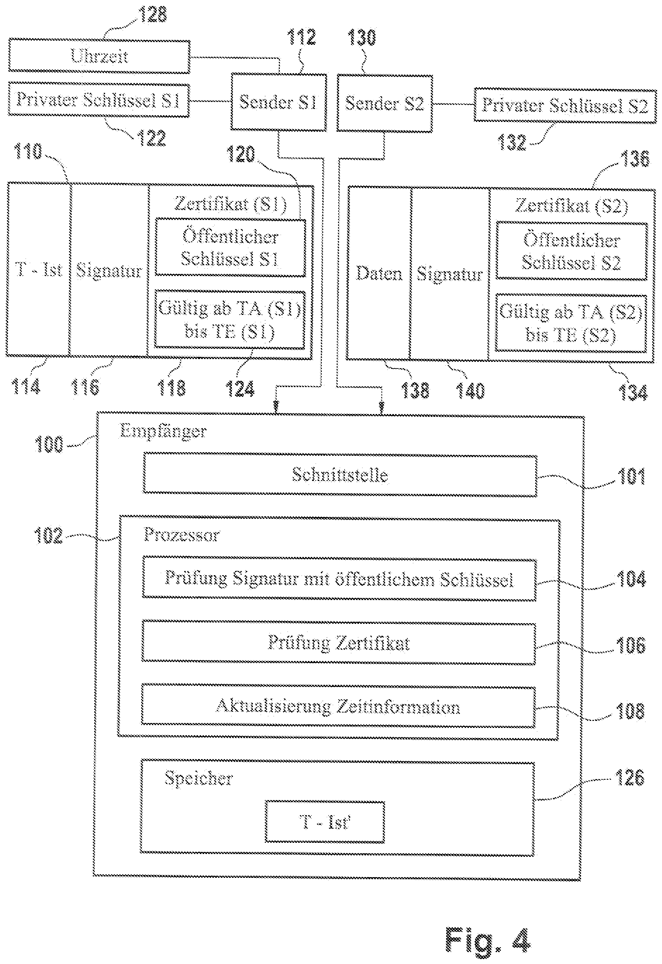

Die Figur 4 zeigt ein Blockdiagramm einer weiteren Ausführungsform eines erfindungsgemäßen Empfängers. Elemente der Figur 4, die Elementen der Figur 1 entsprechen, sind mit denselben Bezugszeichen gekennzeichnet.

Im Unterschied zu der Ausführungsform der Figur 1 beinhalten die Daten 114 der elektronischen Nachricht 110 in der Ausführungsform der Figur 4 eine aktuelle Uhrzeit T-ist zur Aktualisierung der Zeitreferenz des Empfängers 100. Bei der elektronischen Nachricht 110 handelt es sich also um eine Zeitsynchronisationsnachricht für den Empfänger 110, d.h. zur Aktualisierung von dessen in dem elektronischen Speicher 126 gespeicherten Zeitinformation T-ist'. Der Sender S1 112 ist hierzu mit einer vertrauenswürdigen Zeitreferenz 128 gekoppelt, die ein Zeitsignal mit der aktuellen Uhrzeit T-ist liefert. Der Sender 112 generiert daraus in regelmäßigen oder unregelmäßigen Abständen elektronische Nachrichten 110 mit der jeweils aktuellen UhrzeiT-ist.

Wie in der Ausführungsform der Figur 1, so wird auch in der Ausführungsform der Figur 4 die Signatur 116 der elektronischen Nachricht 110 mit Hilfe der Programminstruktionen 104 geprüft. Ferner wird die Validität des Zertifikats 118 mit Hilfe der Programminstruktionen 106 geprüft, einschließlich einer Überprüfung, ob das Zertifikat noch innerhalb seiner Gültigkeitsdauer liegt.

Hierzu greifen die Programminstruktionen 106 auf den elektronischen Speicher 126 zu, in dem die Zeitinformation T-ist' gespeichert ist. Die gespeicherte Zeitinformation T-ist' wird als hinreichand gute Näherung an die aktuelle Zeit für den Zweck der Prüfung, ob das Zertifikat innerhalb seiner Gültigkeitsdauer liegt, betrachtet.

Wenn die Signatur 116 als gültig erkannt worden ist, und das Zertifikat die Validitätsprofung einschließlich der Überprüfung, ob es in seiner Gültigkeitsdauer liegt, bestanden hat, so wird die gespeicherte Zeitinformation T-ist' durch die Programminstruktionen 108 aktualisiert, und zwar durch die mit der elektronischen Nachricht 110 empfangene aktuelle Zeit T-tst.

Der Empfänger 100 kann von einem oder mehreren anderen Sendern signierte elektronische Nachrichten mit Nutzdaten empfangen, wie zum Beispiel von dem Sender S2 130. Dem Sender 130 sind ein privater Schlüssel und ein entsprechendes Zertifikat 134 zugeordnet. Der Sender 130 kann elektronische Nachrichten 136 an die Schnittstelle 101 des Empfängers 100 senden. Die elektronischen Nachrichten 136 beinhalten jeweils Nutzdaten 138 und eine Signatur 140 der Nutzdaten 138 oder der gesamten elektronischen Nachricht 136.

Wenn der Empfänger 100 eine solche elektronische Nachricht 136 mit Nutzdaten 138 empfängt, so wird die Vertrauenswürdigkeit der elektronischen Nachricht 136 zunächst geprüft. Hierzu überprüfen die Programminstruktionen 104 die Signatur 140 und die Programminstruktionen 106 prüfen die Validität des Zertifikats 134. Die überprüfung, ob das Zertifikat 134 innerhalb seiner Gültigkeitsdauer liegt, wird anhand der in dem Speicher 126 gespeicherten Zeitinformation T-ist' durchgeführt. Eine Aktualisierung der gespeicherten Zeitinformation T-ist' findet anhand der elektronischen Nachricht 136 nicht statt, da für eine solche Aktualisierung ausschließlich die von dem Sender S1 112 gesendeten Nachrichten 110 vorgesehen sind. Es sind jedoch Ausführungsformen möglich, bei denen von verschiedenen Sendern empfangene Zeitinformationen zur Aktualisierung der gespeicherten Zeitinformation T-ist' verwendet werden können.

Nach erfolgreicher Überprüfung der Vertrauenwürdigkeit der elektronischen Nachricht 136 werden die Nutzdaten 138 von dem Empfänger 100 verarbeitet.

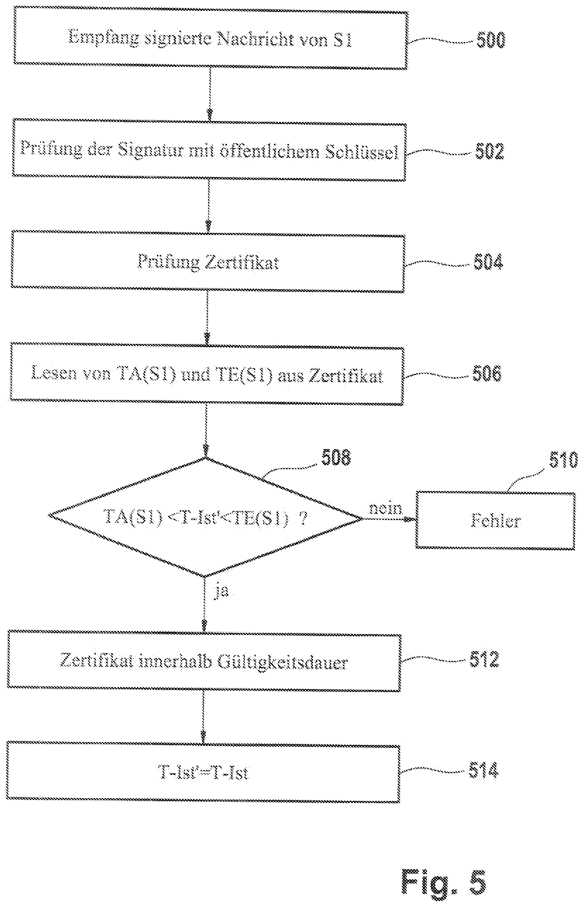

Die Figur 5 zeigt ein Flussdiagramm einer Ausführungsform eines erfindungsgemäßen Verfahrens zur Aktualisierung der gespeicherten Zeitinformation T-ist'. In dem Schritt 500 wird von einer Ausführungsform des erfindungsgemäßen Empfängers eine signierte Nachricht von einem Sender S1 empfangen, wobei es sich bei der signierten Nachricht um eine Zeitsynchronisationsnachricht handelt. In dem Schritt 502 wird die Signatur der Nachricht überprüft. In dem Schritt 504 wird die Validität des Zertifikats, welches der Signatur zugeordnet ist, durch eine Zertifikatskettenprüfung überprüft.

Zur Überprüfung, ob das Zertifikat innerhalb seiner Gültigkeitsdauer liegt, werden in dem Schritt 506 die Anfangszeit TA und die Endzeit TE des dem Sender S1 zugeordneten Zertifikats aus diesem Zertifikat ausgelesen. In dem Schritt 508 wird dann überprüft, ob die in dem Empfänger gespeicherte Zeitinformation T-ist'vor der Endzeit TE liegt. Vorzugsweise wird geprüft, ob die Zeitinformation T-ist' zwischen diesen beiden Zeiten TA und TE liegt. Wenn dies nicht der Fall ist, liegt das Zertifikat außerhalb seiner Gültigkeitsdauer, sodass in dem Schritt 510 ein Fehlersignal generiert wird. Ist das Gegenteil der Fall, so wird das Zertifikat als innerhalb seiner Gültigkeitsdauer liegend betrachtet (Schritt 512) und die mit dem Zeitsynchronisationssignal empfangene aktuelle Zeitinformation T-ist wird zur Aktualisierung der gespeicherten Zeitinformation T-ist' verwendet (Schritt 514).

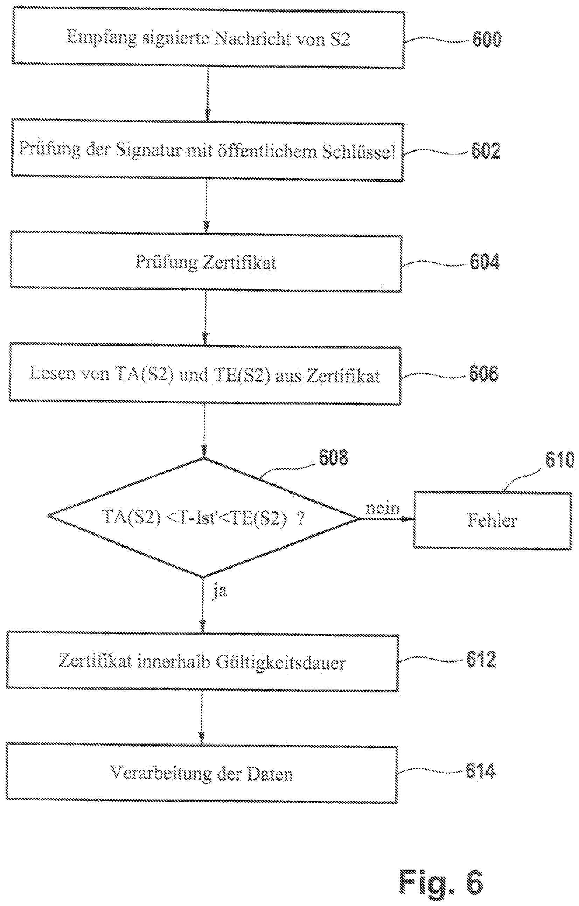

Die Figur 6 zeigt ein Flussdiagramm einer weiteren Ausführungsform eines erfindungsgemäßen Verfahrens zur Verarbeitung einer elektronischen Nachricht, die Nutzdaten beinhaltet (vgl. die elektronische Nachricht 136 in der Ausführungsform der Figur 4).

In dem Schritt 600 wird die signierte Nachricht von einem Sender S2 (vgl. Sender 130 der Figur 4) empfangen. In dem Schritt 602 wird die Signatur dieser Nachricht geprüft. In dem Schrift 604 wird das der Signatur zugeordnete Zertifikat einer Zertifikatskettenprüfung unverzogen. Zur Prüfung, ob das Zertifikat innerhalb seiner Gültigkeitsdauer liegt, werden in dem Schritt 606 die Anfangszeit und die Endzeit der Gültigkeitsdauer des dem Sender S2 zugeordneten Zertifikats aus diesem Zertifikat ausgelesen.

In dem Schritt 608 wird geprüft, ob die in dem Empfänger gespeicherte Zeitinformation T-isf vor der Endzeit, insbesondere zwischen der Anfangszeit und der Endzeit des Zertifikats des Senders S2 liegen. Falls dies nicht der Fall ist, wird in dem Schritt 610 ein Fehlarsignal generiert. Im gegenteiligen Fall wird in dem Schritt 612 das Zertifikat als innerhalb seiner Gültigkeitsdauer liegend betrachtet Die Validitätsprüfung des Zertifikats ist damit abgeschlossen. Die in dem Schritt 600 empfangene Nachricht wird daher als vertrauenswürdig betrachtet, sodass in dem Schritt 614 die mit der Nachricht empfangenen Nutzdaten (vgl. die Nutzdaten 138 in der Ausführungsform der Figur 4) von dem Empfänger verarbeitet werden können.

Bei den Empfängern 100 der Ausführungsform der Figur 1 bzw. Figur 4 kann es sich beispielsweise um so genannte RFID-Chips handeln. Ein erändungsgemäßer RFID-Chip kann in ein Dokument integriert sein, wie zum Beispiel in ein Wert- oder Sicherheitsdokument, insbesondere einen elektronischen Reisepass, Personalausweis, Führerschein, Visum, Firmenausweis, Berechtigungsnachweis oder dergleichen. Beispielsweise sind in dem Speicher 126 vertrauliche Informationen gespeichert, insbesondere biometrische Daten, auf die nur durch autorisierte Stellen zugegriffen werden kann. Wenn der Empfänger 100 ein diesbezügliches signiertes Kommando mit einem Zertifikat empfängt, beispielsweise zum Auslesen der vertraulichen Informationen, wird die Prüfung, ob dieses Zertifikat innerhalb seiner Gültigkeitsdauer liegt, mit Hilfe der gespeicherten Zeitinformation TA' bzw. T-ist' durchgeführt.

In anderen Ausführungsformen kann ein erfindungsgemäßer Empfänger 100 der Ausführungsform der Figur 1 oder Figur 4 in einer Chipkarte integriert sein, beispielsweise zur Realisierung einer Kreditkarten- oder Bezahlfunktion.

Ausführungsformen eines erfindungsgemäßen Empfängers 100 können auch in einem elektronischen Gerät integriert sein, wie zum Beispiel ein Navigationsgerät. Bei einem solchen Navigationsgerät kann ein Schutz gegen die Einspeisung von fehlerhaften Positionsdaten erforderlich sein, insbesondere zum Schutz gegen Sabotage, Es muss also sichergestellt sein, dass die von dem Empfänger empfangenen Positionsdaten von einer vertrauenswürdigen Quelle stammen. Solche Positionsdaten können beispielsweise die Daten 114 in der Ausführungsform der Fig. 1 oder die Daten 138 in der Ausführungsform der Fig. 4 beinhalten. Für die im Rahmen einer kryptographischen Überprüfung einer empfangenen Nachricht mit Positionsdaten stattfindende Überprüfung der Gültigkeit des entsprechenden Zertifikats wird wiederum auf die gespeicherte Zeitinformation TA' bzw. T-ist' zugegriffen.

Ausführungsformen eines erfindungsgemäßen Empfängers 100 können auch Teil einer Anlagensteuerung oder dergleichen sein. Auch hier ist es zum Schutz gegen Ausspähung und/oder Sabotage und zum Schutz gegen terroristische Akte zum Teil erforderlich, die Vertrauenswürdigkeit einer empfangenen Nachricht zu überprüfen. Eine solche Nachricht kann Daten zur Anlagensteuerung beinhalten. Solche Daten zur Anlagensteuerung können beispielsweise die Daten 114 in der Ausführungsform der Fig. 1 oder die Daten 138 in der Ausführungsform der Fig. 4 beinhalten. Die Prüfung der Vertrauenswürdigkeit erfolgt wiederum erfindungsgemäß durch Verwendung der gespeicherten Zeitinformation TA' bzw. T-ist'.

### Bezugszeichenliste

- 100: Empfänger
- 101: Schnittstelle
- 102: Prozessor
- 104: Programminstruktionen
- 106: Programminstruktionen
- 108: Programminstruktionen
- 110: elektronische Nachricht
- 112: Sender
- 114: Daten
- 116: Signatur
- 118: Zertifikat
- 120: öffentlicher Schlüssel
- 122: privater Schlüssel
- 124: Gültigkeitsdauer
- 126: elektronischer Speicher
- 128: Zeitreferenz
- 130: Sender
- 132: privater Schlüssel
- 134: Zertifikat
- 138: elektronische Nachricht
- 138: Nutzdaten

## Patentansprüche

1. Verfahren zum Empfang einer vertrauenswürdigen Zeitinformation mit folgenden Schritten:
- Empfang eines Zertifikats (118), wobei das Zertifikat eine Angabe der Anfangszeit (TA) von dessen Gültigkeitsdauer beinhaltet,
- Überprüfung der Validität des Zertifikats,
- Speicherung der Anfangszeit als die vertrauenswürdige Zeitinformation in einem Speicher (126), wenn das Zertifikat als valide erkannt worden ist, wobei in dem Speicher eine gespeicherte Zeitinformation (TA') vorhanden ist, und **dadurch gekennzeichnet, dass** die Anfangszeit in dem Speicher gespeichert wird, wenn die Anfangszeit nach der gespeicherten Zeitinformation liegt, indem die gespeicherte Zeitinformation durch die Anfangszeit ersetzt wird.

2. Verfahren nach Anspruch 1, wobei das Zertifikat eine Angabe der Endzeit (TE) von dessen Gültigkeit beinhaltet, und wobei anhand der gespeicherten Zeitinformation vor deren Ersetzung durch die Anfangszeit geprüft wird, ob die Gültigkeitsdauer des Zertifikats als noch nicht überschritten gilt.

3. Verfahren nach Anspruch 1 oder 2, wobei das Zertifikat mit einer Nachricht (110) empfangen wird, die Daten (114) und eine Signatur (116) der Daten beinhaltet, wobei die Signatur anhand des Zertifikats auf deren Gültigkeit geprüft wird, und die Daten verarbeitet werden, wenn die Signatur als gültig erkannt worden ist.

4. Verfahren zum Empfang einer vertrauenswürdigen Zeitinformation mit folgenden Schritten:
- Empfang einer ersten signierten Nachricht (110) mit einer Zeitinformation (T-Ist) von einem ersten Sender (112),
- Überprüfung der Validität der Signatur (116) der Nachricht,
Speicherung der Zeitinformation als die vertrauenswürdige Zeitinformation in einem Speicher (126), wenn die Signatur als gültig erkannt worden ist, wobei in dem Speicher eine gespeicherte Zeitinformation (T-Ist') vorhanden ist, **dadurch gekennzeichnet, dass** die mit der ersten signierten Nachricht empfangene Zeitinformation in dem Speicher gespeichert wird, wenn sie nach der gespeicherten Zeitinformation liegt.

5. Computerprogrammprodukt, insbesondere digitales Speichermedium, umfassend ausführbaren Instruktionen (104, 106, 108), die bei der Ausführung des Programms durch einen Computer diesen veranlassen, das Verfahren nach einem der vorgehenden Ansprüche auszuführen.

6. Integrierter elektronischer Schaltkreis mit
- Mitteln (101) zum Empfang eines Zertifikats (118), wobei das Zertifikat eine Angabe der Anfangszeit (TA) von dessen Gültigkeitsdauer beinhaltet,
- Mitteln (106) zur internen Überprüfung der Validität des Zertifikats,
- einen elektronischen Speicher (126),
- Mitteln (108) zur Speicherung der Anfangszeit als einer vertrauenswürdigen Zeitinformation in dem elektronischen Speicher, wenn das Zertifikat valide ist,
wobei die Mittel zur internen Überprüfung der Validität des Zertifikats zum Zugriff auf die in dem elektronischen Speicher gespeicherte vertrauenswürdige Zeitinformation ausgebildet sind, wobei in dem elektronischen Speicher eine gespeicherte Zeitinformation (TA') vorhanden ist, **dadurch gekennzeichnet, dass** der integrierte elektronische Schaltkreis mit Mitteln zur Prüfung, ob die Anfangszeit nach der gespeicherten Zeitinformation liegt, ausgestattet ist, wobei die Anfangszeit nur dann in dem Speicher gespeichert wird, wenn sie nach der gespeicherten Zeitinformation liegt.

7. Integrierter elektronischer Schaltkreis nach Anspruch 6, wobei die Mittel zur Speicherung der Anfangszeit zur Ersetzung der in dem elektronischen Speicher gespeicherten Zeitinformation durch die Anfangszeit ausgebildet sind.

8. Integrierter elektronischer Schaltkreis nach Anspruch 6 oder 7, wobei die Mittel zur internen Überprüfung der Validität des Zertifikats so ausgebildet sind, dass anhand der gespeicherten Zeitinformation vor deren Ersetzung durch die Anfangszeit geprüft wird, ob die Gültigkeitsdauer des Zertifikats als noch nicht überschritten gilt.

9. Integrierter elektronischer Schaltkreis nach einem der vorhergehenden Ansprüche 6 bis 8, wobei die Mittel zum Empfang so ausgebildet sind, dass das Zertifikat mit einer elektronischen Nachricht (110) empfangen wird, die Daten (114) und eine Signatur (116) der Daten beinhaltet, und mit Mitteln (104) zur Überprüfung der Signatur anhand des Zertifikats, sodass die Daten nur dann verarbeitet werden, wenn die Signatur als gültig erkannt worden ist.

10. Integrierter elektronischer Schaltkreis mit
- Mitteln (101) zum Empfang einer ersten signierten Nachricht (110) mit einer Zeitinformation (T-Ist) von einem ersten Sender (112),
- Mitteln (104) zur Überprüfung der Validität der Signatur der elektronischen Nachricht,
- einem elektronischen Speicher (126),
- Mitteln (108) zur Speicherung der Zeitinformation als eine vertrauenswürdige Zeitinformation in dem elektronischen Speicher für eine nachfolgende kryptographische Prüfung, wenn die Signatur valide ist,
- wobei in dem Speicher eine gespeicherte Zeitinformation (T-Ist') vorhanden ist, **dadurch gekennzeichnet, dass** die mit der ersten signierten Nachricht empfangene Zeitinformation in dem Speicher gespeichert wird, wenn sie nach der gespeicherten Zeitinformation liegt.

11. Integrierter elektronischer Schaltkreis nach einem der vorhergehenden Ansprüche 6 bis 10, wobei es sich um einen RFID-Chip handelt.

12. Dokument, insbesondere Wert- oder Sicherheitsdokument, mit einem integrierten elektronischen Schaltkreis nach einem der vorhergehenden Ansprüche 6 bis 11.

13. Chipkarte mit einem integrierten elektronischen Schaltkreis nach einem der vorhergehenden Ansprüche 6 bis 11.

14. Elektronisches Gerät, insbesondere Navigationsgerät oder Anlagensteuerung, mit einem integrierten elektronischen Schaltkreis nach einem der vorhergehenden Ansprüche 6 bis 11.

## Claims

1. A method for receiving a confidential time information, comprising the following steps:
- receiving a certificate (118), wherein the certificate contains an indication of the start time (TA) of the period of validity of the certificate,
- verifying the validity of the certificate,
- storing the start time as the confidential time information in a memory (126) if the certificate has been identified as valid, wherein a stored time information (TA') is provided in the memory,
**characterised in that**, if the start time lies after the stored time information, the start time is stored in the memory by replacing the stored time information by the start time.

2. The method according to claim 1, wherein the certificate contains an indication of the end time (TE) of the validity of the certificate, and wherein, on the basis of the stored time information before replacement thereof by the start time, it is checked whether the certificate is still valid.

3. The method according to claim 1 or 2, wherein the certificate is received with a message (110) containing data (114) and a signature (116) of the data, wherein the validity of the signature is checked on the basis of the certificate, and the data is processed if the signature has been identified as valid.

4. A method for receiving a confidential time information, comprising the following steps:
- receiving a first signed message (110) with a time information (T-ist) from a first transmitter (112),
- verifying the validity of the signature (116) of the message,
- storing the time information as the confidential time information in a memory (126) if the signature has been identified as valid, wherein a stored time information (T-ist') is provided in the memory,
**characterised in that** the time information received with the first signed message is stored in the memory if it lies after the stored time information.

5. A computer program product, in particular a digital storage medium, comprising executable instructions (104, 106, 108), which, when the program is run by a computer, prompt the computer to carry out the method according to any one of the preceding claims.

6. An integrated electronic circuit comprising
- means (101) for receiving a certificate (118), wherein the certificate contains an indication of the start time (TA) of the period of validity of the certificate,
- means (106) for internally verifying the validity of the certificate,
- an electronic memory (126),
- means (108) for storing the start time as a confidential time information in the electronic memory if the certificate is valid,
wherein the means for internally verifying the validity of the certificate are designed for access to the confidential time information stored in the electronic memory, wherein a stored time information (TA') is provided in the electronic memory, **characterised in that** the integrated electronic circuit is equipped with means for checking whether the start time lies after the stored time information, wherein the start time is only stored in the memory if it lies after the stored time information.

7. The integrated electronic circuit according to claim 6, wherein the means for storing the start time are designed to replace the time information stored in the electronic memory by the start time.

8. The integrated electronic circuit according to claim 6 or 7, wherein the means for internally verifying the validity of the certificate are designed such that, on the basis of the stored time information, before replacement thereof by the start time, it is checked whether the certificate is still valid.

9. The integrated electronic circuit according to any one of preceding claims 6 to 8, wherein the receiving means are designed such that the certificate is received with an electronic message (110) containing data (114) and a signature (116) of the data, and with means (104) for verifying the signature on the basis of the certificate, such that the data is processed only if the signature has been identified as valid.

10. An integrated electronic circuit comprising
- means (101) for receiving a first signed message (110) with a time information (T-ist) from a first transmitter (112),
- means (104) for verifying the validity of the signature of the electronic message,
- an electronic memory (126),
- means (108) for storing the time information as a confidential time information in the electronic memory for a subsequent cryptographic verification, if the signature is valid,
- wherein a stored time information (T-ist') is provided in the memory,
**characterised in that** the time information received with the first signed message is stored in the memory if it lies after the stored time information.

11. The integrated electronic circuit according to any one of preceding claims 6 to 10, wherein the integrated electronic circuit is an RFID chip.

12. A document, in particular a document of value or a security document, comprising an integrated electronic circuit according to any one of preceding claims 6 to 11.

13. A chip card comprising an integrated electronic circuit according to any one of preceding claims 6 to 11.

14. An electronic device, in particular a navigation device or system controller, comprising an integrated electronic circuit according to any one of preceding claims 6 to 11.

## Revendications

1. Procédé de réception d'une information de temps digne de confiance avec les étapes suivantes :
- réception d'un certificat (118), où le certificat contient une indication de l'heure de début (TA) de sa durée de validité,
- vérification de la validité du certificat,
- enregistrement de l'heure de début sous la forme d'information de temps digne de confiance dans une mémoire (126) lorsque le certificat a été reconnu comme valide, où, dans la mémoire, une information de temps enregistrée (TA') est présente, et
**caractérisé en ce que**
l'heure de début est enregistrée dans la mémoire lorsque l'heure de début se situe après l'information de temps enregistrée, tandis que l'information de temps enregistrée est remplacée par l'heure de début.

2. Procédé selon la revendication 1, dans lequel le certificat contient une indication de l'heure de fin (TE) de sa validité, et où, à l'aide de l'information de temps enregistrée, avant son remplacement par l'heure de début, il est vérifié si la durée de validité du certificat n'est pas encore dépassée.

3. Procédé selon la revendication 1 ou 2, dans lequel le certificat est reçu avec un message (110) qui contient des données (114) et une signature (116) des données, où la signature est vérifiée quant à sa validité à l'aide du certificat, et les données sont traitées lorsque la signature a été reconnue comme valide.

4. Procédé de réception d'une information de temps digne de confiance avec les étapes suivantes :
- réception d'un premier message (110) signé avec une information de temps (T_{-réel}) à partir d'un premier émetteur (112),
- vérification de la validité de la signature (116) du message,
enregistrement de l'information de temps en tant qu'information de temps digne de confiance dans une mémoire (126), lorsque la signature a été reconnue comme valide, où une information de temps enregistrée (T_{-réel'}) est présente dans la mémoire, **caractérisé en ce que** l'information de temps reçue avec le premier message signé est enregistrée dans la mémoire lorsqu'elle se situe après l'information de temps enregistrée.

5. Produit de programme informatique, notamment support de mémoire numérique, comprenant des instructions (104, 106, 108) exécutables qui, lors de l'exécution du programme par l'ordinateur, font que celui-ci exécute le procédé selon l'une des revendications précédentes.

6. Circuit électronique intégré doté de
- moyens (101) pour la réception d'un certificat (118), où le certificat contient une indication de l'heure de début (TA) de sa durée de validité,
- moyens (106) pour la vérification interne de la validité du certificat,
- d'une mémoire (126) électronique,
- de moyens (108) pour l'enregistrement de l'heure de début en tant qu'information de temps digne de confiance dans la mémoire électronique lorsque le certificat est valide,
où les moyens pour la vérification de la validité du certificat sont conçus pour un accès à l'information de temps digne de confiance enregistrée dans la mémoire électronique, où une information de temps (TA') enregistrée est présente dans la mémoire électronique,
**caractérisé en ce que** le circuit électronique intégré est équipé avec des moyens pour la vérification si
l'heure de début se situe après l'information de temps enregistrée, où l'heure de début
n'est alors uniquement enregistrée dans la mémoire que si elle se situe après l'information de temps enregistrée.

7. Circuit électronique intégré selon la revendication 6, dans lequel les moyens pour l'enregistrement de l'heure de début sont conçus pour le remplacement de l'information de temps enregistrée dans la mémoire électronique par l'heure de début.

8. Circuit électronique intégré selon la revendication 6 ou 7, dans lequel les moyens pour la vérification interne de la validité du certificat sont conçus de telle manière qu'à l'aide de l'information de temps enregistrée avant son remplacement par l'heure de début, il est vérifié si la durée de validité du certificat est toujours considérée comme non dépassée.

9. Circuit électronique intégré selon l'une des revendications précédentes 6 à 8, dans lequel les moyens pour la réception sont conçus de telle manière que le certificat est reçu avec un message (110) électronique, contient les données (114) et une signature (116) des données, et avec des moyens (104) pour la vérification de la signature à l'aide du certificat de sorte que les données ne sont traitées que lorsque la signature a été reconnue comme valide.

10. Circuit électronique intégré doté
- de moyens (101) pour la réception d'un premier message (110) signé avec une information de temps (T_{-réel}) à partir d'un premier émetteur (112),
- de moyens (104) pour la vérification de la validité de la signature du message électronique,
- une mémoire (126) électronique,
- des moyens (108) pour l'enregistrement de l'information de temps sous la forme d'information de temps digne de confiance dans la mémoire électronique pour un examen cryptographique ultérieur lorsque la signature est valide,
- où, une information de temps (T_{-réel'}) enregistrée dans la mémoire est présente,
**caractérisé en ce que**
l'information de temps reçue avec le premier message signé est enregistrée dans la mémoire si elle se situe après l'information de temps enregistrée.

11. Circuit électronique intégré selon l'une des revendications précédentes 6 à 10, dans lequel il s'agit d'une puce de radio-identification RFID.

12. Document, notamment document de valeur ou de sécurité, avec un circuit électronique intégré selon l'une des revendications précédentes 6 à 11.

13. Carte à puce avec un circuit électronique intégré selon l'une des revendications précédentes 6 à 11.

14. Appareil électronique, notamment appareil de navigation, ou commande d'installation avec un circuit électronique intégré selon l'une des revendications précédentes 6 à 11.
